(19) Europäisches Patentamt / European Patent Office / Office européen des brevets

(11) **EP 4 280 512 B1**

(12) **EUROPEAN PATENT SPECIFICATION**

(45) Date of publication and mention
of the grant of the patent:
**22.10.2025  Bulletin 2025/43**

(21) Application number: **21925182.4**

(22) Date of filing: **09.02.2021**

(51) International Patent Classification (IPC):
**H04L 5/00** *(2006.01)*

(52) Cooperative Patent Classification (CPC):
**H04B 1/525**

(86) International application number:
**PCT/CN2021/076361**

(87) International publication number:
**WO 2022/170516 (18.08.2022 Gazette 2022/33)**

(54) **INFORMATION TRANSMISSION METHOD AND DEVICE THEREFOR**

INFORMATIONSÜBERTRAGUNGSVERFAHREN UND VORRICHTUNG DAFÜR

PROCÉDÉ DE TRANSMISSION D'INFORMATIONS ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.11.2023  Bulletin 2023/47**

(73) Proprietor: **Huawei Technologies Co., Ltd.
Shenzhen, Guangdong 518129 (CN)**

(72) Inventors:
• **CAI, Meng
  Shenzhen, Guangdong 518129 (CN)**
• **SUN, Ke
  Shenzhen, Guangdong 518129 (CN)**
• **JIANG, Bing
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(56) References cited:
CN-A- 106 410 376    CN-A- 110 278 011
CN-A- 111 614 582    CN-A- 111 669 205
US-A1- 2018 199 218

**Description**

**TECHNICAL FIELD**

This disclosure generally relates to the communication field, and the invention in particular relates to an information transmission method and an apparatus.

**BACKGROUND**

Currently, a large quantity of mobile base stations around the world use microwaves to carry information. As the quantity of mobile base stations increases, the microwaves continue to play an important role in a scenario without optical fibers. Currently, a maximum transmission capability of an E-band microwave is about 25 Gbps, which cannot satisfy bandwidth growth requirements. Therefore, spectral efficiency needs to be further improved.

A common means for improving spectral efficiency is to use a higher modulation mode. However, due to limitation of a component level of an E-band outdoor unit (Outdoor Unit, ODU), implementing higher modulation is complex and expensive. In addition, E-band links are prone to failure in bad weather conditions. How to improve E-band spectral efficiency and ensure service transmission in extreme weather conditions is an urgent problem to be resolved.

CN 111 669 205 A relates to a channel measurement method and equipment. The method comprises the following steps: the access network equipment receives a sound reference signal (SRS) from the terminal equipment. The access network equipment receives a power adjustment factor used by a first antenna port from the terminal equipment. The first antenna port is an antenna port adopted by the terminal equipment for sending data signals. The access network equipment determines a first uplink channel according to the SRS. The access network equipment determines a target channel according to the first uplink channel and the power adjustment factor used by the first antenna port. The target channel is a target uplink channel or a target downlink channel. Further, the accuracy of channel measurement can be improved on the premise of not increasing air interface

resources. SUMMARY

The object of the present invention is to provide an information transmission method and an apparatus, to resolve the problem that an E-band link is prone to failure in adverse weather conditions, improve E-band spectral efficiency, and ensure normal service transmission. This object is solved by the attached independent claims, and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the claimed invention or its embodiments.

According to a first aspect of the invention, the invention provides an information transmission method, and the method includes:

transmitting a service through a first transmission mode, where a first transmission mode includes transmitting a first service through a first port group, the first port group includes a first port and a second port, the first port is configured to send the first service, the second port is configured to receive the first service, the first port corresponds to a first frequency, and the second port corresponds to a second frequency; transmitting a second service through a second port group, where the second port group includes a third port and a fourth port, the third port is configured to send the second service, the fourth port is configured to receive the second service, the third port corresponds to the second frequency, and the fourth port corresponds to the first frequency; and

determining that a same-frequency isolation degree is less than or equal to a first threshold, or that a self-interference-to-noise power ratio inr satisfies a first condition, and transmitting a service through a second transmission mode, where the second transmission mode includes transmitting a third service through the first port group and the second port group, where

the same-frequency isolation degree is a first isolation degree between the first port and the fourth port, and/or a second isolation degree between the second port and the third port, the third service is the same-frequency isolation degree between the ports at the same frequency of the first service or a first sub-service of the first service and a second sub-service of the second service, or the first service and the second sub-service.

The foregoing technical solution provides a method for performing duplicate transmission by duplicating a part of services. The solution resolves a problem that the same-frequency isolation degree of antennas deteriorates and links fail in adverse weather conditions.

With reference to the first aspect, in some not claimed implementations of the first aspect, the method may further include: before transmitting the third service through the first port group and the second port group, adjusting a frequency corresponding to the third port to the first frequency, where the third port is configured to send the third service, and adjusting a frequency corresponding to the fourth port to the second frequency, where the fourth port is configured to receive the third service.

The foregoing not-claimed technical solution further reduces interference during transmission of a high-priority service in extreme weather conditions through a frequency modulation method.

In a possible but not claimed manner, when service transmission is performed after frequency modulation, first processing is performed on the first port and the third port, so that a sending delay of the first port is the same as a sending delay of the third port, and a sending phase of the first port is the same as a sending phase of the third port; and maximum ratio combining MRC is performed on information received by the second port and information received by the fourth port.

The foregoing not-claimed technical solution further improves a service transmission method, enhances an antenna gain, and ensures good transmission and reception of a service.

According to a second aspect of the invention, the invention provides an information transmission method, and the method includes:

transmitting a service through a first transmission mode, where a first transmission mode includes transmitting a first service through a first port group, the first port group includes a first port and a second port, the first port is configured to send the first service, the second port is configured to receive the first service, the first port corresponds to a first frequency, and the second port corresponds to a second frequency;

transmitting a second service through a second port group, where the second port group includes a third port and a fourth port, the third port is configured to send the second service, the fourth port is configured to receive the second service, the third port corresponds to the second frequency, and the fourth port corresponds to the first frequency; and

determining that a same-frequency isolation degree is less than or equal to a first threshold, or that a self-interference-to-noise power ratio inr satisfies a first condition, and transmitting a service through a second transmission mode, where the second transmission mode includes: determining a quantity of first slots and a quantity of second slots, sending a fourth service on the first slot through the first port, receiving the fourth service on the second slot through the second port, sending a fifth service on the first slot through the third port, and receiving the fifth service on the second slot through the fourth port, where the first slot and the second slot do not overlap, where

the same-frequency isolation degree is a first isolation degree between the first port and the fourth port, and/or a second isolation degree between the second port and the third port, the fourth service includes the first service or a third service, the fifth service includes the second service or the third service, and the third service includes the first service, a first sub-service of the first service and a second sub-service of the second service, or the first service and the second sub-service.

This solution distinguishes the slots occupied by transmitting and receiving a service, resolves the problem of interference in a time division manner, and ensures the service transmission in extreme weather conditions.

In a possible but not claimed implementation, the quantity of first slots and the quantity of second slots may be determined based on an uplink-downlink ratio of the fourth service or the fifth service.

For example, although not claimed, the quantity of the first slots and the quantity of the second slots may be determined based on the uplink-downlink ratio of a to-be-transmitted service. For example, the quantity of slots may be determined based on the ratio of a radio access service (such as, 4:1).

This not-claimed solution provides a method for determining the quantity of slots. The quantity is determined based on the uplink-downlink ratio of a service, and the time domain resource of an uplink service is further accurately distinguished from the time domain resource of a downlink service.

According to a third aspect of the invention, the invention provides an information transmission method, and the method includes:

transmitting a service through a first transmission mode, where a first transmission mode includes transmitting a first service through a first port group, the first port group includes a first port and a second port, the first port is configured to send the first service, the second port is configured to receive the first service, the first port corresponds to a first frequency, and the second port corresponds to a second frequency;

transmitting a second service through a second port group, where the second port group includes a third port and a fourth port, the third port is configured to send the second service, the fourth port is configured to receive the second service, the third port corresponds to the second frequency, and the fourth port corresponds to the first frequency; and

determining that a same-frequency isolation degree is less than or equal to a first threshold, or that a self-interference-to-noise power ratio inr satisfies a first condition, and transmitting a service through a second transmission mode, where the second transmission mode includes: disabling the third port, or transmitting a third service through the first port group and disabling the third port, where

the same-frequency isolation degree is a first isolation degree between the first port and the fourth port, and/or a second isolation degree between the second port and the third port, and the third service includes the first service, a first sub-service of the first service and a second sub-service of the second service, or the first service and the second sub-service.

The foregoing technical solution disables transmission of a group of same-frequency port groups, resolves the problem of same-frequency interference in adverse weather conditions, and ensures normal transmission of a high-priority service.

With reference to any one of not-claimed possible implementations of a first aspect, a second aspect, and a third aspect, a first threshold and a second threshold may be pre-configured.

In other words, in a possible not-claimed manner, when the same-frequency isolation degree is less than or equal to a first threshold, the transmission mode is switched to a second transmission mode.

In another possible manner, it is determined whether the self-interference-to-noise power ratio inr satisfies a first condition. The first condition may be that the self-interference-to-noise power ratio inr is less than a second threshold, or the first condition may be that the signal-to-noise ratio snr and the self-interference-to-noise power ratio inr satisfy a first preset condition. Switch to the second transmission mode when the first condition is satisfied.

For example, the first preset condition may be:

$$snr > 8inr^2 + 14inr + 6$$

With reference to any one of not-claimed possible implementations of a first aspect, a second aspect, and a third aspect, a third service may include a sub-service, and the sub-service may be selected according to its priority. For example, a first sub-service may be a service with a highest priority in a first service, and a second sub-service may be a service with a highest priority in a second service.

The third service may also include the first service, and the priority of the first service is higher than that of the second service.

It should be understood that the first sub-service may be a single sub-service, or may be a plurality of sub-services with a parallel highest priority.

The foregoing not-claimed technical solution ensures the integrity of transmission of a high-priority service to the greatest extent in extreme weather conditions.

According to a not-claimed fourth aspect, a communication apparatus is provided, and the apparatus may include:

a transceiver unit, where the transceiver unit includes at least two port groups, and the transceiver unit is configured to: transmit a service through a first transmission mode, where the first transmission mode includes: the transceiver unit transmits a first service through a first port group, the first port group includes a first port and a second port, the first port is configured to send the first service, the second port is configured to receive the first service, the first port corresponds to a first frequency, and the second port corresponds to a second frequency; and transmitting a second service through a second port group, where the second port group includes a third port and a fourth port, the third port is configured to send the second service, the fourth port is configured to receive the second service, the third port corresponds to the second frequency, and the fourth port corresponds to the first frequency;

a processing unit, where the processing unit is configured to determine that a same-frequency isolation degree is less than or equal to a first threshold, or that a self-interference-to-noise power ratio inr satisfies a first condition, the processing unit switches the first transmission mode to a second transmission mode, and the second transmission mode includes transmitting a third service through the first port group and the second port group, where

the same-frequency isolation degree is a first isolation degree between the first port and the fourth port, and/or a second isolation degree between the second port and the third port, and the third service includes the first service, a first sub-service of the first service and a second sub-service of the second service, or the first service and the second sub-service. When the same-frequency isolation degree is less than or equal to the first threshold, the processing unit switches the first transmission mode to the second transmission mode. The second transmission mode includes that the transceiver unit transmits the first service through the first port group and the second port group, or transmits the first service through the first port group, and disables the third port. The same-frequency isolation degree refers to a same-frequency isolation degree between the ports with a same frequency.

The not-claimed solution provides an apparatus for supporting transmission mode switching. The apparatus supports duplicating a part of a service to perform double transmission, solving the problem that in adverse weather conditions, the same-frequency isolation degree of an antenna deteriorates and links fail.

With reference to a not-claimed fourth aspect, in a possible implementation, the processing unit is further configured to adjust a frequency corresponding to the third port to the first frequency and adjust a frequency corresponding to the fourth port to the second frequency.

The transceiver unit sends the third service through the third port, and receives the third service through the fourth port.

The apparatus provided in this not-claimed solution supports frequency modulation, which further reduces interference during transmission of a high-priority service in extreme weather conditions in a frequency division manner.

In a possible not-claimed implementation, when service transmission is performed after frequency modulation, first processing is performed on the first port and the third port, so that a sending delay of the first port is the same as a sending delay of the third port, and a sending phase of the first port is the same as a sending phase of the third port; and maximum ratio combining (MRC) is performed on information received by the second port and the fourth port.

In a possible not-claimed implementation, the processing unit is further configured to: perform first processing, so that a sending delay of the first port is the same as a sending delay of the third port, and a sending phase of the first port is the same as a sending phase of the third port, making the sending delays and the sending phases of the first port and the third port are separately aligned; and perform maximum ratio combining MRC on information received by the second port and information received by the fourth port.

The foregoing technical not-claimed solution further improves service transmission, enhances an antenna gain, and ensures good transmission and reception of a service.

According to a fifth not-claimed aspect, a communication apparatus is provided, and the apparatus may include:

a transceiver unit, where the transceiver unit includes at least two port groups, and the transceiver unit is configured to: transmit a service through a first transmission mode, where the first transmission mode includes: the transceiver unit transmits a first service through a first port group, the first port group includes a first port and a second port, the first port is configured to send the first service, the second port is configured to receive the first service, the first port corresponds to a first frequency, and the second port corresponds to a second frequency; and transmitting a second service through a second port group, where the second port group includes a third port and a fourth port, the third port is configured to send the second service, the fourth port is configured to receive the second service, the third port corresponds to the second frequency, and the fourth port corresponds to the first frequency;

a processing unit, where the processing unit is configured to determine that a same-frequency isolation degree is less than or equal to a first threshold, or that a self-interference-to-noise power ratio inr satisfies a first condition, the processing unit switches the first transmission mode to a second transmission mode, and the second transmission mode includes: determining a quantity of first slots and a quantity of second slots, sending a fourth service on the first slot through the first port, receiving the fourth service on the second slot through the second port, sending a fifth service on the first slot through the third port, and receiving the fifth service on the second slot through the fourth port, where the first slot and the second slot do not overlap,

the same-frequency isolation degree is a first isolation degree between the first port and the fourth port, and/or a second isolation degree between the second port and the third port, the fourth service includes the first service or a third service, the fifth service includes the second service or the third service, and the third service includes the first service, a first sub-service of the first service and a second sub-service of the second service, or the first service and the second sub-service.

This not-claimed solution distinguishes the slots occupied by transmitting and receiving a service, resolves the problem of interference in a time division manner, and ensures the service transmission in extreme weather conditions.

In a possible not-claimed implementation, the processing unit determines the quantity of first slots and the quantity of second slots based on an uplink-downlink ratio of the fourth service or the fifth service.

For not-claimed example, the quantity of the first slots and the quantity of the second slots may be determined based on the uplink-downlink ratio of a to-be-transmitted service. For example, the quantity of slots may be determined based on the ratio of a radio access service (such as, 4:1).

The apparatus provided in this not-claimed solution supports determining the quantity of corresponding slots based on an uplink-downlink ratio of a service, and further accurately distinguishes the time domain resource of an uplink service from the time domain resource of a downlink service.

According to a not-claimed sixth aspect, a communication apparatus is provided, and the apparatus may include:

a transceiver unit, where the transceiver unit includes at least two port groups, and the transceiver unit is configured to: transmit a service through a first transmission mode, where the first transmission mode includes: the transceiver unit transmits a first service through a first port group, the first port group includes a first port and a second port, the first port is configured to send the first service, the second port is configured to receive the first service, the first port corresponds to a first frequency, and the second port corresponds to a second frequency; and transmitting a second service through a second port group, where the second port group includes a third port and a fourth port, the third port is configured to send the second service, the fourth port is configured to receive the second service, the third port corresponds to the second frequency, and the fourth port corresponds to the first frequency;

a processing unit, where the processing unit is configured to determine that a same-frequency isolation degree is less than or equal to a first threshold, or that a self-interference-to-noise power ratio inr satisfies a first condition, the processing unit switches the first transmission mode to a second transmission mode, and the second transmission mode includes: disabling the third port, or transmitting a third service through the first port group and disabling the third port, where

the same-frequency isolation degree is a first isolation degree between the first port and the fourth port, and/or a second isolation degree between the second port and the third port, and the third service includes the first service, a first sub-service of the first service and a second sub-service of the second service, or the first service and the second sub-service.

This not-claimed solution provides an apparatus that supports port disabling, supports an antenna to form co-plane or non-plane polarization, reduces self-interference, and resolves the problem of link failure in extreme weather conditions.

With reference to any one of possible not-claimed implementations of a fourth aspect, a fifth aspect, and a sixth aspect, the priority of the first service is higher than that of the second service, the first sub-service is a sub-service with a highest priority of the first service, and the second sub-service is a sub-service with a highest priority of the second service.

The third service may also include the first service, and the priority of the first service is higher than that of the second service.

It should be understood that the first sub-service may be a single sub-service, or may be a plurality of sub-services with a parallel highest priority.

With reference to any one of possible not-claimed implementations of a fourth aspect, a fifth aspect, and a sixth aspect, when the same-frequency isolation degree is less than or equal to the first threshold, the processing unit further calculates the self-interference-to-noise power ratio inr and the signal-to-noise ratio snr, and when the relationship between the self-interference-to-noise power ratio inr and the signal-to-noise ratio snr satisfies the first preset condition, the processing unit switches the first transmission mode to the second transmission mode.

With reference to any one of possible not-claimed implementations of a fourth aspect, a fifth aspect, and a sixth aspect, the first preset condition may satisfy:

$$snr > 8inr^2 + 14inr + 6$$

According to a seventh not-claimed aspect, a communication apparatus is provided, where the communication apparatus is configured to perform the communication method provided in any one of a first aspect, a second aspect, and a third aspect, or in any one of possible implementations of a first aspect, a second aspect, and a third aspect. Specifically, the communication apparatus may include a module configured to perform the communication method provided in the first aspect.

According to an eighth aspect of the invention, the invention provides a communication apparatus, including a processor. The processor is coupled to a memory, and may be configured to execute the instruction in the memory, to implement the communication method provided in any one of a first aspect, a second aspect, and a third aspect, or in any one of possible implementations of a first aspect, a second aspect, and a third aspect. Optionally, the communication apparatus further includes a memory. Optionally, the communication apparatus further includes a communication interface, where the processor is coupled to the communication interface, and the communication interface is configured to input and/or output information. The information includes at least one of the instructions and data.

In an not-claimed implementation, the communication apparatus is a terminal device or a network device. When the communication apparatus is a terminal device or a network device, the communication interface may be a transceiver or an input/output interface.

In another not-claimed implementation, the communication apparatus is a chip or a chip system. When the communication apparatus is a chip or a chip system, the communication interface may be an input/output interface, or may be an input/output interface, an interface circuit, an output circuit, an input circuit, a pin, a related circuit, or the like on the chip or the chip system. The processor may alternatively be embodied as a processing circuit or a logic circuit.

According to a ninth aspect of the invention, the invention provides a computer-readable storage medium, where the computer-readable storage medium stores a computer program, and when the computer program is executed by a communication apparatus, the communication apparatus is enabled to implement the communication method in any one of possible implementations of the first aspect.

According to a tenth not-claimed aspect, a computer program product including instructions is provided, and when the instructions are executed by a computer, the communication apparatus is enabled to implement the communication method provided in the first aspect.

According to an eleventh not-claimed aspect, a communication system is provided, including the foregoing network devices and/or terminal devices.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

**BRIEF DESCRIPTION OF DRAWINGS**

FIG. 1 (a) is a schematic diagram of a communication system applicable to an embodiment of this application;

FIG. 1 (b) is a schematic diagram of another communication system applicable to an embodiment of this application;

FIG. 2 is a schematic diagram of a 4T4R transmission mode;

FIG. 3 is a schematic interaction diagram of a system applicable to an embodiment of this application;

FIG. 4 is a schematic diagram of a 4T4R transmission mode applicable to an embodiment of this application;

FIG. 5 is a schematic diagram of an ASD+MRC transmission mode applicable to an embodiment of this application;

FIG. 6 is a schematic diagram of a communication apparatus supporting an ASD+MRC transmission mode according to an embodiment of this application;

FIG. 7 is a schematic diagram of a TDD-FDD transmission mode applicable to an embodiment of this application;

FIG. 8 is a schematic diagram of a communication apparatus supporting a TDD-FDD transmission mode according to an embodiment of this application;

FIG. 9 is a schematic diagram of an FDD transmission mode applicable to an embodiment of this application;

FIG. 10 is a schematic block diagram of a communication apparatus according to an embodiment of this application;

FIG. 11 is another schematic block diagram of a communication apparatus according to an embodiment of this application;

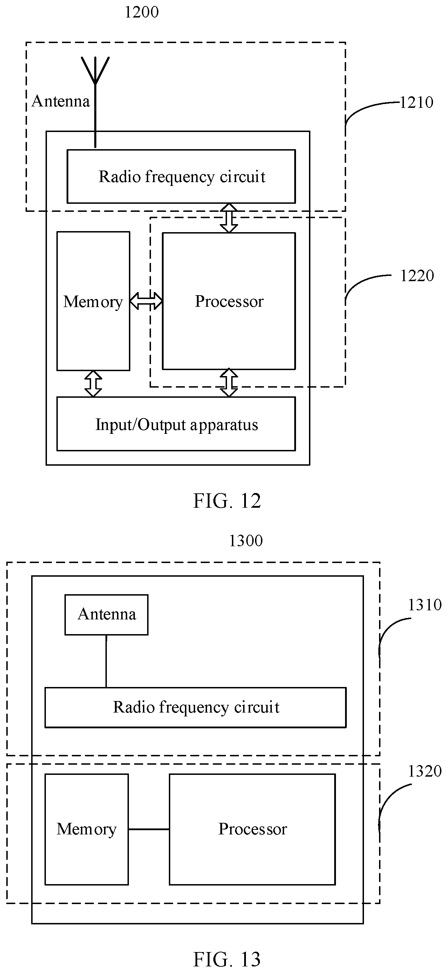

FIG. 12 is a schematic block diagram of a terminal device according to an embodiment of this application; and

FIG. 13 is a schematic block diagram of a network device according to an embodiment of this application.

**DESCRIPTION OF EMBODIMENTS**

The following describes technical solutions of this application with reference to the drawings.

The wireless communication system mentioned in embodiments of this application includes but is not limited to: a global system for mobile communications (Global System for Mobile Communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (LTE) system, an long term evolution-advanced (LTE-A) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a worldwide interoperability for microwave access (Worldwide Interoperability for Microwave Access, WiMAX) communication system, a fifth-generation (fifth-generation, 5G) communication system, and a converged system of a plurality of access systems, or three application scenarios of an evolved system and a 5G mobile communication system: eMBB, URLLC, and eMTC, or a new communication system that will emerge in the future.

The network device in embodiments of this application may be any device having a wireless transceiver function or a chip that may be disposed in the device. The device includes but is not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, Home evolved NodeB, or Home NodeB, HNB) a baseband unit (BaseBand Unit, BBU), an access point (Access Point, AP), a wireless relay node, a wireless backhaul node, and a transmission point (transmission point, TP), or a transmission and reception point (transmission and reception point, TRP), or a remote radio head (remote radio head, RRH) in a wireless fidelity (Wireless Fidelity, Wi-Fi) system, or the like, it may be 5G, for example, NR, a gNB in a system, or a transmission point (TRP or TP), one or one group of antenna panels (including a plurality of antenna panels) of base stations in the 5G system, or it may be a network node that forms a gNB or a transmission point, for example, a baseband unit (BBU), a distributed unit (distributed unit, DU), or the like.

In some deployments, the gNB may include a central unit (central unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and a service, and implements functions of a radio resource control (radio resource control, RRC) and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU performs some physical layer processing functions, RF processing, and functions related to active antennas. Because the information at the RRC layer is finally changed into the information at the PHY layer, or is changed from the information at the PHY layer, in this architecture, the higher layer signaling such as the RRC layer signaling may also be considered to be sent by the DU or by the DU+AAU. It may be understood that the network device may be a device that includes one or more of a CU node, a DU node, and an AAU node. In addition, the CU may be divided into a network device in a radio access network (radio access network, RAN), or the CU may be divided into a network device in a core network (core network, CN). This is not limited in this application.

For example, the network device may be used as a scheduling device. In this case, the network device may include, for example, but is not limited to: an LTE base station eNB, an NR base station gNB, an operator, and the like. Its functions may include, for example: configuring uplink and downlink resources, and sending downlink control information (downlink control information, DCI) in a scheduling mode of the base station. For example, the network device may further serve as a sending device. In this case, the network device may include, for example, but is not limited to: TRP and RRH, and its functions may include, for example: sending downlink signals and receiving uplink signals.

The terminal device in embodiments of this application may also be referred to as user equipment (user equipment, UE), an access terminal, a user unit, a user station, a mobile station, a mobile station, a remote station, a remote terminal, a mobile device, a user terminal, a terminal, a wireless communication device, a user agent, or a user apparatus. The terminal device in embodiments of this application may be a mobile phone (mobile phone), a pad (Pad), a computer having a wireless transceiver function, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the foregoing terminal device and a chip that may be disposed in the foregoing terminal device are collectively referred to as a terminal device.

The functions of the terminal device may include, for example, but are not limited to: receiving a downlink/sidelink signal, and/or sending an uplink/sidelink signal.

In this application, a physical downlink control channel PDCCH is used as an example to describe a downlink control channel, a physical downlink shared channel PDSCH is used as an example to describe a downlink data channel, and a carrier is used as an example to describe a frequency-domain unit. A time unit in the 5G system is described by using a slot as an example. Alternatively, a slot in this application may be a transmission time interval TTI and/or a time unit and/or a subframe and/or a mini-slot.

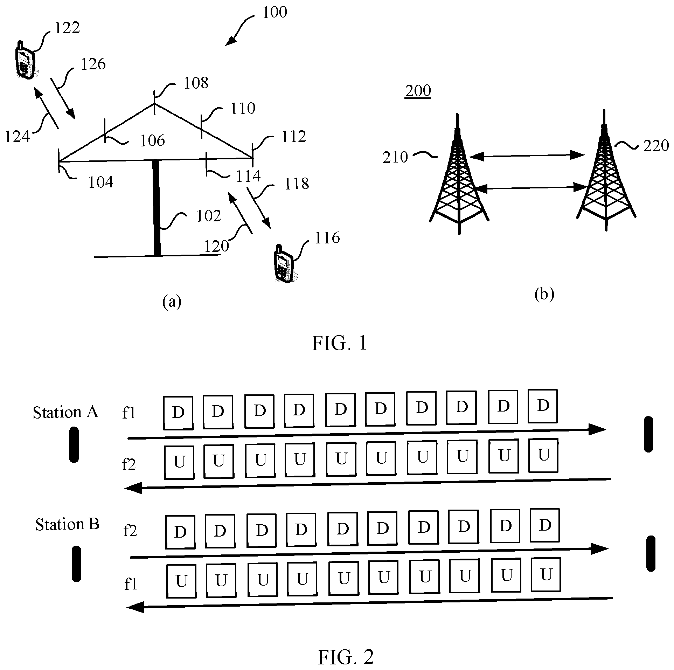

FIG. 1 (a) is a schematic diagram of a communication system for transmitting information according to this application. As shown in FIG. 1 (a), the communication system 100 includes a network device 102, and the network device 102 may include a plurality of antennas, for example, antennas 104, 106, 108, 110, 112, and 114. In addition, the network device 102 may additionally include a transmitter chain and a receiver chain. A person of ordinary skill in the art may understand that both the transmitter chain and the receiver chain may include a plurality of components related to signal sending and receiving (for example, a processor, a modulator, a multiplexer, a demodulator, a demultiplexer, or an antenna).

The network device 102 may communicate with a plurality of terminal devices (for example, the terminal device 116 and the terminal device 122). However, it may be understood that the network device 102 may communicate with any quantity of terminal devices that are similar to the terminal device 116 or 122. The terminal devices 116 and 122 each may be, for example, a cellular phone, a smart phone, a portable computer, a handheld communication device, a handheld computing device, a satellite radio apparatus, a global positioning system, a PDA, and/or any other appropriate device configured to perform communication in the wireless communication system 100.

As shown in FIG. 1, the terminal device 116 communicates with the antennas 112 and 114, where the antennas 112 and 114 send information to the terminal device 116 by using a forward link 118, and receive the information from the terminal device 116 by using a reverse link 120. In addition, the terminal device 122 communicates with the antennas 104 and 106. The antennas 104 and 106 send information to the terminal device 122 by using a forward link 124, and receive the information from the terminal device 122 by using a reverse link 126.

For example, in a frequency division duplex (Frequency Division Duplex, FDD) system, for example, the forward link 118 and the reverse link 120 may use different frequency bands, and the forward link 124 and the reverse link 126 may use different frequency bands.

For another example, in a time division duplex (Time Division Duplex, TDD) system and a full duplex (Full Duplex) system, the forward link 118 and the reverse link 120 may use a common frequency band, and the forward link 124 and the reverse link 126 may use a common frequency band.

Each antenna (or an antenna group including a plurality of antennas) and/or an area designed for communication is referred to as a sector of the network device 102. For example, an antenna group may be designed to communicate with a terminal device in the sector within coverage of the network device 102. In a process in which the network device 102 communicates with the terminal devices 116 and 122 respectively by using the forward links 118 and 124, a transmit antenna of the network device 102 may improve signal-to-noise ratios of the forward links 118 and 124 by using beamforming. In addition, compared with a manner in which the network device sends a signal to all terminal devices of the network device by using a single antenna, when the network device 102 sends, by using the beamforming, a signal to the terminal devices 116 and 122 that are randomly scattered within a related coverage area, a mobile device in a neighboring cell suffers less interference.

At a given time, the network device 102, the terminal device 116, or the terminal device 122 may be a wireless communication transmitting apparatus and/or a wireless communication receiving apparatus. When sending data, the wireless communication transmitting apparatus may encode the data for transmission. Specifically, the wireless communication transmitting apparatus may obtain (for example, generated, received from other communication apparatuses, or stored in memory) a number of data bits to be transmitted to the wireless communication receiving apparatus through the channel. The data bits may be included in a transport block (or a plurality of transport blocks) of data, and the transport block may be segmented to generate a plurality of code blocks.

In addition, the communication system 100 may be a public land mobile network (an English full name may be: Public Land Mobile Network, and may be PLMN for short), a D2D network, an M2M network, or another network. FIG. 1 is only a simplified schematic diagram of an example. The network may further include another network device, which is not shown in FIG. 1 (a).

It should be noted that in this embodiment of this application, the sending device may be the foregoing network device 102, or may be a terminal device (for example, the terminal device 116 or the terminal device 122). Correspondingly, the receiving end device may be the foregoing terminal device (for example, the terminal device 116 or the terminal device 122), or may be the network device 102. This is not particularly limited in this application.

To facilitate understanding of embodiments of this application, the following first briefly describes terms and backgrounds in this application.

1. Antenna port (antenna port)

An antenna port is referred to as a port for short. It may be understood as a transmit antenna identified by a receiving end, or a transmit antenna that can be spatially distinguished. One antenna port may be configured for each virtual antenna, and each virtual antenna may be a weighted combination of a plurality of physical antennas. Antenna ports may be classified into reference signal ports and data ports according to different signals carried by the antenna ports. The reference signal port includes, for example, but is not limited to, a demodulation reference signal (demodulation reference signal, DMRS) port, a zero power channel state information reference signal (channel state information reference signal, CSI-RS) port, and the like.

2. Time-frequency resource

In embodiments of this application, the data or information may be carried by using a time-frequency resource. The time-frequency resource may include a resource in time domain and a resource in frequency domain. In time domain, the time-frequency resource may include one or more time-domain units (or may also be referred to as a time unit), and in frequency domain, the time-frequency resource may include a frequency-domain unit.

One time-domain unit (which may also be referred to as a time unit) may be one symbol or several symbols, or one mini-slot (mini-slot), or one slot (slot), or one subframe (subframe). The duration of one subframe in time domain may be 1 millisecond (ms), one slot includes 7 or 14 symbols, and one mini-slot may include at least one symbol (for example, orthogonal frequency division multiplexing (orthogonal frequency division multiplexing, OFDM) symbols) (for example, 2 symbols or 7 symbols or 14 symbols, or any quantity of symbols less than or equal to 14 symbols). The foregoing time-domain unit sizes are merely used to facilitate understanding of the solutions in this application, and are not limited to the protection scope of embodiments of this application. It may be understood that the foregoing time-domain unit sizes may be other values, and this is not limited in this application.

One frequency-domain unit may be one resource block (resource block, RB), or one subcarrier (subcarrier), or one resource block group (resource block group, RBG), or one predefined subband (subband), or a precoding resource block group (precoding resource block group, PRG), or a bandwidth part (bandwidth part, BWP), or a resource element (resource element, RE) (or a resource element), or a carrier, or a serving cell.

In the transmission unit mentioned in embodiments of this application, the transmission unit may include any one of the following: A time-domain unit, a frequency-domain unit, or a time-frequency unit. For example, the transmission unit mentioned in embodiments of this application may be replaced with a time-domain unit, or may be replaced with a frequency-domain unit, or may be replaced with a time-frequency unit. For another example, the transmission unit may be alternatively replaced with a transmission occasion. The time-domain unit may include one or more OFDM symbols, or the time-domain unit may include one or more slots, or the like. The frequency-domain unit may include one or more RBs, and the frequency-domain unit may include one or more subcarriers, and the like.

3. Same-frequency full duplex (4 Transmit 4 Receive, 4T4R)

The same-frequency full duplex technology enables simultaneous transmission of downlink data and reception of uplink data in the same frequency band and time-domain unit, thereby multiplying spectral efficiency.

4. Same-frequency isolation degree

At the same frequency, if the transmit power of the local antenna is A and the power leaked from the local transmit antenna to the local receive antenna is B, A/B is the same-frequency isolation degree.
It should be understood that in embodiments of this application, 4T4R is used as an example to describe a service transmission mode, and another transmission mode applicable to embodiments of this application, such as 8T8R and 64T64R, also falls within the protection scope of this application.
As shown in FIG. 1(b), the line of sight-multiple-input multiple-output (Line of Sight-Multiple-Input Multiple-Output, LoS-MIMO) technology extends two antennas at the same site by a distance. Theoretically, the transmission capacity can be doubled. The optimal antenna installation spacing of LoS-MIMO is the Rayleigh distance ($d_{oprimal}$), as shown in formula (1). E-band 5 km transmission is used as an example. The optimal antenna distance $d_{optimal}$ is 3 m. The installation and deployment are difficult.

$$d_{optimal}[m] = \sqrt{\frac{R \cdot c}{2f}} = \sqrt{\frac{R[km] \cdot 300}{2 \cdot f[GHz]}} \tag{1}$$

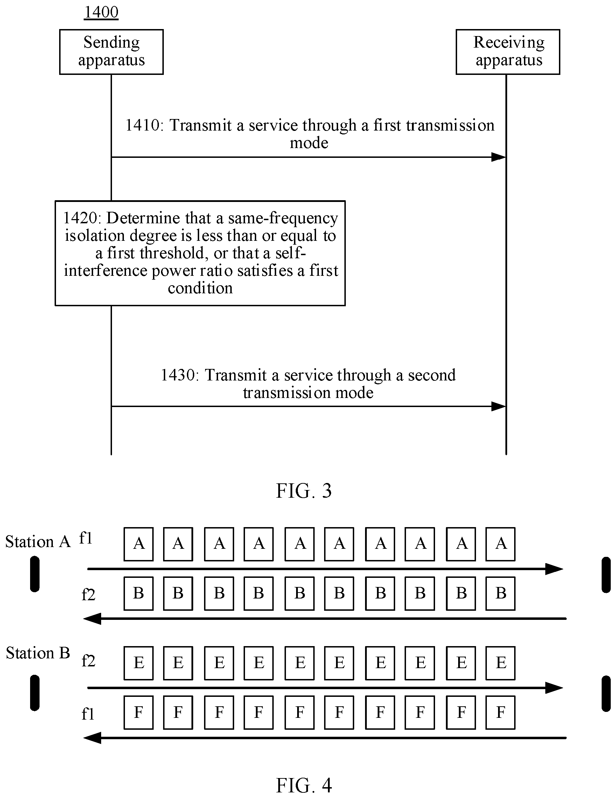

In addition, LoS-MIMO needs to eliminate interference on the Modem, and implementation costs of the chip are relatively high.
E-band has narrow antenna beams, therefore the same-frequency isolation degree of antenna is high, and E-band is suitable for same-frequency full duplex (4T4R) transmission. The same-frequency isolation degree refers to that at the same frequency, assuming that the transmit power of the local antenna is W1 and the power leaked from the local transmit antenna to the local receive antenna is W2, W1/W2 is the same-frequency isolation degree.
Refer to FIG. 2. The basic principles of E-band 4T4R are as follows:
A transmit frequency of station A is f1, and a receive frequency of station A is f2. A transmit frequency of station B is f2, and a receive frequency of station B is f1.
The two antennas of stations A and B are close together, which resolves the installation and deployment problem.
For stations A and B, the FDD mode is still used for transmission, which is compatible with the existing modem.
Because the same-frequency isolation degree of the antenna is high enough, the Modem does not need to perform interference cancellation, and implementation complexity is low. However, when it rains or snows, the transmitted signals are reflected by the rain or snow. As a result, the same-frequency isolation degree deteriorates seriously. For example, the same-frequency isolation degree of antennas is greater than 100 dB on a sunny day (satisfying the requirement). In rainy or snowy days, the isolation deteriorates to about 80 dB. As a result, the E-band 4T4R link fails. The E-band bandwidth is large, and interference suppression using the digital self-interference cancellation method in rainy or snowy days is too complex.
This application provides an E-band 4T4R adaptive degradation method. Compared with 2T2R, E-band 4T4R doubles the capacity on sunny days. In a rain/snow scenario, adaptive degradation technology is used to ensure capacity, preventing E-band 4T4R link failures in extreme weather scenarios.
The following describes specific embodiments of this application with reference to the drawings.
An embodiment of this application, for example, is shown in FIG. 3. When a service is transmitted through a first transmission mode, it is determined that the same-frequency isolation degree is less than or equal to a first threshold, or the self-interference power ratio satisfies a first condition, and a first transmission mode is switched to a second transmission mode.

In another embodiment of this application, an apparatus supporting the foregoing method is provided, including a transceiver unit, where the transceiver unit is configured to send and receive a service; a processing unit, where the processing unit is configured to determine that the same-frequency isolation degree is less than or equal to a first threshold, or the self-interference power ratio satisfies a first condition, and the processing unit is further configured to switch a first transmission mode to a second transmission mode.

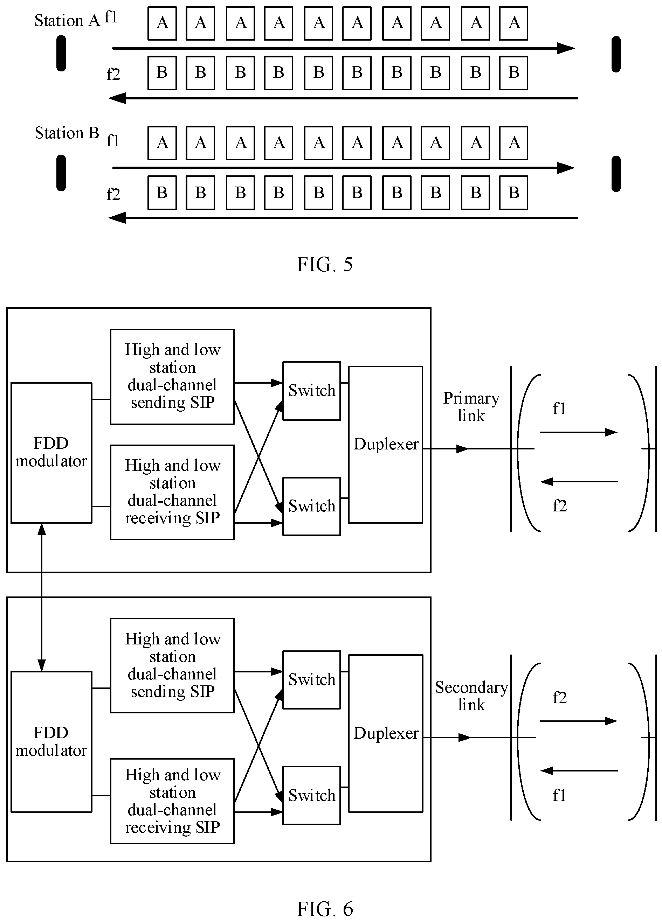

In an embodiment of this application, in a rain/snow scenario, a transmission link is degraded from an E-band 4T4R mode (as shown in FIG. 4) to advanced space diversity (Advanced space diversity, ASD) + maximum ratio combining (Maximum Ratio Combining, MRC) mode (as shown in FIG. 5). ASD indicates that a plurality of transmit antennas implement transmit diversity. MRC indicates that a plurality of receive antennas implement maximum ratio combining.

It should be understood that the 4T4R mode is an embodiment of a first transmission mode, and the ASD+MRC mode is an embodiment of a second transmission mode.

The process of degenerating from 4T4R mode to ASD+MRC mode is as follows:

1: Transmission services are classified into high-priority and low-priority services. In 4T4R mode, 2T2R is used as a primary link, and 2T2R is used as a secondary link. High-priority services on a secondary link can be duplicated to two primary links.

For example, as shown in FIG. 4, a service A and a service B are transmitted, where A is downlink information of the service A, B is uplink information of the service A, E is downlink information of the service B, and F is uplink information of the service B. In the figure, link 1 sends A, link 2 receives B, link 3 sends E, and link 4 receives F. A frequency of link 1 and link 4 is the same as f1, and a frequency of link 2 and link 3 is the same as f2. Link 1 and link 2 are selected as primary links, and link 3 and link 4 are selected as secondary links.

It should be understood that duplicating the high-priority service and modifying the frequency can ensure normal transmission of the high-priority service, and reduce same-frequency interference as much as possible in a frequency division manner.

Only high-priority services are duplicated for dual transmission without changing the frequency, which can resolve the problem of link failure in extreme weather conditions to some extent.

2: Self-interference estimation is performed according to the channel state parameter of the link.

For example, a method for obtaining the preset switching condition through self-interference estimation is as follows:

It is assumed that all transmit powers are the same as S and all noise powers are the same as N, and the channel capacity $C_{ASDandMRC}$ of ASD+MRC may be determined according to S and N. Specifically, it can be calculated according to formula (2):

$$C_{ASDandMRC} = \log_2(1 + \frac{8S}{N}) \tag{2}$$

The E-band 4T4R channel capacity $C_{fd}$ may be shown in formula (3):

$$C_{fd} = \log_2(1 + \frac{S}{I_1 + N}) + \log_2(1 + \frac{S}{I_2 + N}) \tag{3}$$

The optimal switching point *Switchpoint* may be shown in formula (4):

$$Switchpoint = \arg\max(C_{ASDandMRC}, C_{fd}) \tag{4}$$

so as to obtain,

$$\log_2(1 + \frac{S}{I_1 + N}) + \log_2(1 + \frac{S}{I_2 + N}) > \log_2(1 + \frac{8S}{N}) \tag{5}$$

If the transmit power is normalized to 0 dB, S = 1. After derivation, it may be obtained that the preset condition may be shown in formula (6):

$$snr > 8inr^2 + 14inr + 6 \tag{6}$$

where inr1 = $I_1/N$, inr2 = $I_2/N$, and snr = 1/N. Without losing generality, let inr1 = inr2 = inr,
where self-interference-to-noise power ratio inr is the self-interference noise power ratio, signal-to-noise ratio snr is the signal to noise power ratio, $I_1$ is the self-interference power of the local antenna port, and $I_2$ is the self-interference power of the peer antenna port.

3: If a preset degradation switching condition is satisfied, a receive and transmit frequency of a secondary link is modified to be the same as that of a primary link, and a service signal of a primary link is duplicated to a secondary link.

For example, as shown in FIG. 5, the frequency of the link 3 is adjusted to f1, which is the same as that of the link 1. The frequency of link 4 is adjusted to f2, which is the same as that of link 2. In this way, all links in FIG. 5 are used to transmit the service A, or may be used to transmit a high-priority sub-service in the service A and the service B, or may be used to transmit a high-priority sub-service in the service A and a high-priority sub-service in the service B.

4: The transmitter Modem performs delay and phase alignment on the transmitted signals according to an ASD requirement, and the receiver Modem performs MRC combining on the received signals.

The recovery process from ASD+MRC mode to 4T4R mode is as follows:

1: Self-interference estimation is performed on a secondary link in the measurement slot.
2: If a preset recovery switching condition is satisfied, the receive and transmit frequency of a secondary link is modified to be opposite to those of a primary link.
For example, a preset recovery switching condition may be $snr \leq 8inr^2 + 14inr + 6$. After the condition is satisfied, the frequency of link 4 is recovered to f1, and the frequency of link 3 is recovered to f2.
3: A secondary link is recovered to transmit services.

For example, the service transmitted on the link 3 and the link 4 is recovered to the service B, and the link 1 and the link 2 are recovered to transmit the service A.

It should be understood that a service priority may be configured by a higher layer, or may be manually defined. This is not limited in this application.

It should be further understood that the distinction between a primary link and a secondary link may be manually selected, or may be determined in other applicable manners. This is not limited in this application.

This embodiment of this application provides a method for degrading a transmission link from an E-band 4T4R mode to an ASD+MRC mode. In a rain/snow scenario, not only an E-band 4T4R link failure problem can be resolved, but also a theoretical 9 dB gain can be obtained. The E-band transmission distance can be increased. In addition, the recovery method from ASD+MRC mode to E-band 4T4R mode is provided to ensure normal service transmission in normal weather conditions.

FIG. 6 shows an embodiment of an apparatus for supporting transmission mode switching in another embodiment of this application. A microwave apparatus for supporting degradation from a 4T4R mode to an ASD+MRC mode includes a sending module, a receiving module, and a modulation module.

Specifically, an embodiment of the sending module is a high and low station dual-channel sending SIP (Session Initiation Protocol, SIP), which is configured to send a service.

An embodiment of the receiving module is a high and low station dual-channel receiving SIP, which is configured to receive a service.

The switch is used to support switching between high and low frequencies of the sending module and the receiving module.

The interface is configured to exchange data and control signals between modulation modules. An embodiment of an interface location in this application is disposed between an FDD modem of a primary link and an FDD modem of a secondary link.

Self-interference estimation is performed according to the channel state parameter of the link, and when a preset degeneration switching condition is satisfied, switch switching is performed so that a transmit/receive frequency of a secondary link is the same as that of a primary link. For example, the frequency of the link 3 is adjusted to f1, which is the same as that of the link 1. The frequency of link is adjusted 4 to f2, which is the same as that of link 2.

For example, as shown in FIG. 5, the frequency of the link 3 is adjusted to f1, which is the same as that of the link 1. The frequency of link 4 is adjusted to f2, which is the same as that of link 2. The high-priority sub-service of the service B on a secondary link may be duplicated to a primary link, and then the service on a primary link is duplicated to a secondary link. In this way, all links in FIG. 5 are used to transmit the service A, or may be used to transmit a high-priority sub-service in the service A and the service B, or may be used to transmit a high-priority sub-service in the service A and a high-priority sub-service in the service B.

Self-interference estimation is performed according to the channel state parameter of the link, and when a preset recovery switching condition is satisfied, a transmit/receive frequency of a secondary link is opposite to that of a primary link through switching. For example, the frequency of the link 3 is adjusted to f2, which is the same as that of the link 2. The frequency of link 4 is adjusted to f1, which is the same as that of link 1.

In FIG. 5, link 3 and link 4 recover transmitting the service B, and link 1 and link 2 recover transmitting the service A.

It should be understood that the interface may be any switch that implements data and control signal exchange, for example, it may be a common public radio (Common Public Radio Interface, CPRI) optical interface, or may be a network port. This is not limited in this application.

It should be understood that the switch may be any switch used to switch a frequency, for example, it may be a ferrite switch, or may be a micro electromechanical system (Micro Electromechanical System, MEMS) switch. This is not limited in this application.

This embodiment of this application provides an apparatus for supporting degradation of a transmission link from an E-band 4T4R mode to an ASD+MRC mode. In a rain/snow scenario, an E-band 4T4R link failure problem can be resolved. In addition, the theoretical 9 dB gain can be obtained, which increases the E-band transmission distance. In addition, the ASD+MRC mode can be recovered to the E-band 4T4R mode, ensuring normal service transmission in normal weather conditions.

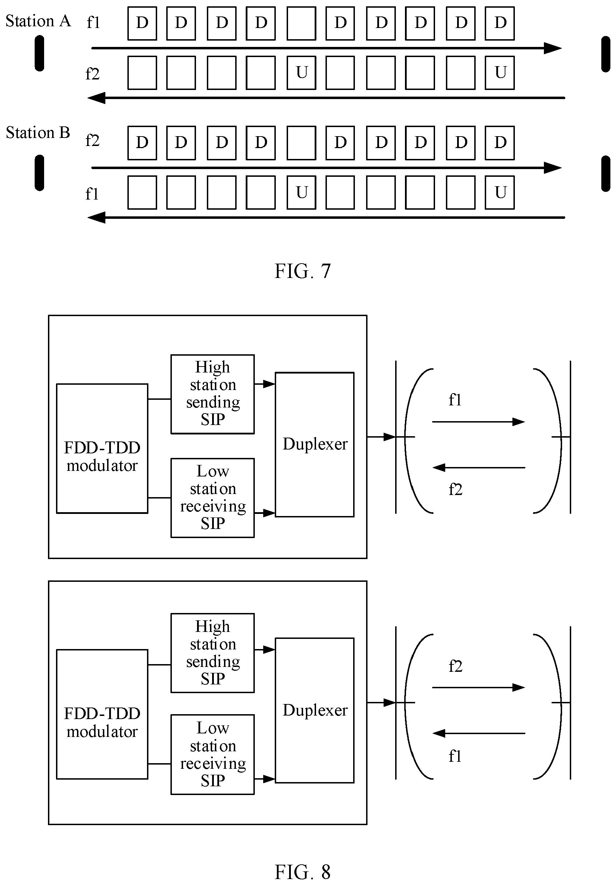

In another embodiment of this application, as shown in FIG. 7, a transmission link is degraded from an E-band 4T4R mode to an FDD-TDD mode.

It should be understood that the 4T4R mode is an embodiment of a first transmission mode, and the FDD-TDD mode is an embodiment of a second transmission mode.

The process of degenerating from 4T4R to FDD-TDD is as follows:

1: Transmission services are classified into high-priority and low-priority services. In 4T4R mode, 2T2R is used as a primary link, and 2T2R is used as a secondary link. The high-priority service on a secondary link is duplicated to the two primary links, and then the to-be-transmitted service on a primary link is duplicated to a secondary link.

For example, as shown in FIG. 7, D is downlink information, U is uplink information, the frequencies of the link 1 and the link 4 are the same as f1, and the frequencies of the link 2 and the link 3 are the same as f2. The link 1 and the link 2 are selected as primary links, and the link 3 and the link 4 are selected as secondary links, and both are used to transmit the service A, or may be used to transmit a high-priority sub-service in the service A and the service B, or may be used to transmit a high-priority sub-service in the service A and a high-priority sub-service in the service B.

2: Self-interference estimation is performed according to the channel state parameter of the link.

A method for obtaining the preset switching condition through self-interference estimation is the same as that described above, which is not described herein again.

3: If the preset degeneration switching condition is satisfied, the same-frequency sending slot is separated from the receiving slot. An embodiment of the slot differentiation may be differentiated according to a ratio (for example, 4:1) of radio access services.

For example, as shown in FIG. 7, time-frequency resources of same-frequency link 1 and link 4, and time-frequency resources of same-frequency link 2 and link 3 are configured according to a specific ratio, and the uplink-downlink ratio may be 4:1. The downlink resource is four slots, and the uplink resource is one slot.

It should be understood that, the replication of the high-priority service signal can ensure complete transmission of the high-priority service in a time division manner. After the slots occupied by the uplink and downlink services are divided, the unchanged services can also reduce same-frequency interference of the original services.

The recovery process from FDD-TDD to 4T4R is as follows:

1: Self-interference estimation is performed on a secondary link in the measurement slot.

2: If a preset recovery switching condition is satisfied, a secondary link is restored to the 4T4R service for transmission.

For example, a preset recovery switching condition may be $snr \le 8inr^2 + 14inr + 6$: when the condition is satisfied, the uplink and downlink resource allocation is restored to the initial state.

It should be understood that a service priority may be configured by a higher layer, or may be manually defined. This is not limited in this application.

It should be further understood that the distinction between a primary link and a secondary link may be manually selected, or may be determined in other applicable manners. This is not limited in this application.

This embodiment of this application provides a method for degrading a transmission link from an E-band 4T4R mode to an FDD-TDD mode. In a rain/snow scenario, an E-band 4T4R link failure problem can be resolved. In addition, the downlink capacity decreases slightly compared with E-band 4T4R (when the uplink-downlink ratio is 4:1, the downlink capacity decreases by only 20%.), and a method for recovering FDD-TDD mode to E-band 4T4R mode is also provided to ensure normal service transmission in normal weather conditions.

Another embodiment of this application, as shown in FIG. 8, is an embodiment of an apparatus for supporting transmission mode switching, that is, a microwave apparatus for supporting degradation from a 4T4R mode to an FDD-TDD mode. The apparatus includes a sending module, a receiving module, and a modulation module.

Specifically,

an embodiment of the modulation module is an FDD-TDD modem. The FDD-TDD modem supports both the FDD modem algorithm and the TDD modem algorithm, and supports switching between the two algorithms.

The sending module is configured to send a service. An embodiment of the sending module is that a high station sends a SIP.

The receiving module is configured to receive a service. An embodiment of the receiving module is that a low station receives a SIP.

The service A of a primary link is duplicated to a secondary link, that is, the link 3 and the link 4 in FIG. 5 are also used to transmit the service A. D is downlink information, U is uplink information, the frequencies of the link 1 and the link 4 are the same as f1, and the frequencies of the link 2 and the link 3 are the same as f2. Link 1 and link 2 are selected as primary links, and link 3 and link 4 are selected as secondary links.

Self-interference estimation is performed according to the channel state parameter of the link, and when a preset degeneration switching condition is satisfied, the modulation module separates a same-frequency transmit slot from a same-frequency receive slot. An embodiment of the slot differentiation may be differentiated according to a ratio of radio access services (for example, 4:1).

For example, as shown in FIG. 7, time-frequency resources of same-frequency link 1 and link 4, and time-frequency resources of same-frequency link 2 and link 3 are configured according to a specific ratio, and the uplink-downlink ratio may be 4:1. The downlink resource is four slots, and the uplink resource is one slot.

Self-interference estimation is performed according to the channel state parameter of the link, and recover 4T4R service transmission if a preset restoration switching condition is satisfied.

This embodiment of this application provides a method for degrading a transmission link from an E-band 4T4R mode to an FDD-TDD mode. In a rain/snow scenario, an E-band 4T4R link failure problem can be resolved. In addition, the downlink capacity decreases slightly compared with E-band 4T4R (when the uplink-downlink ratio is 4:1, the downlink capacity decreases by only 20%), and a method for recovering FDD-TDD mode to E-band 4T4R mode is also supported to ensure normal service transmission in normal weather conditions.

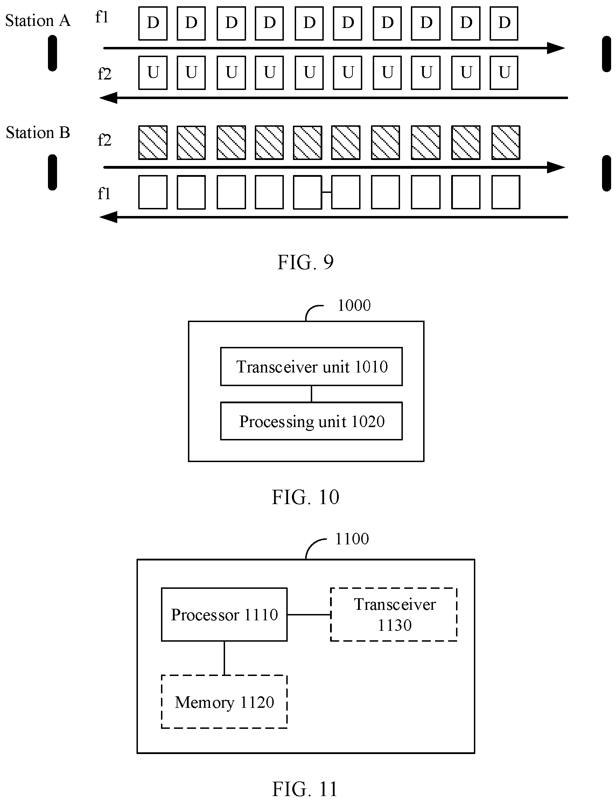

In another embodiment of this application, as shown in FIG. 9, a transmission link is degraded from an E-band 4T4R mode to an FDD mode.

The process of degenerating from 4T4R to FDD is as follows:

1: Transmission services are classified into high-priority and low-priority services. In 4T4R mode, 2T2R is used as a primary link, and 2T2R is used as a secondary link. Duplicate high-priority services on a secondary link to the two primary links.

For example, as shown in FIG. 9, the transmission service A may also be used to transmit a high-priority sub-service in both the service A and the service B, where D is downlink information, U is uplink information, and the frequencies of the link 1 and the link 4 are the same as f1. The frequencies of the link 2 and the link 3 is the same as f2. Link 1 and link 2 are selected as primary links, and link 3 and link 4 are selected as secondary links.

2: Self-interference estimation is performed according to the channel state parameter of the link.

A method for obtaining the preset degeneration switching condition through self-interference estimation is the same as that described above, which is not described herein again.

3: If a preset degeneration switching condition is satisfied, the sending of the two secondary links is disabled, forming co-plane or hetero-plane dual-polarization.

The recovery process from FDD mode to 4T4R mode is as follows:

1: Self-interference estimation is performed on a secondary link in the measurement slot.

2: If a preset recovery switching condition is satisfied, a secondary link is restored to the 4T4R service for transmission.

For example, a preset recovery switching condition may be $snr \leq 8inr^2 + 14inr + 6$, and a transmission status of a transmit port in a secondary link is enabled.

It should be understood that a service priority may be configured by a higher layer, or may be manually defined. This is not limited in this application.

It should be further understood that the distinction between a primary link and a secondary link may be manually selected, or may be determined in other applicable manners. This is not limited in this application.

It should be understood that, by replicating a signal of a high-priority service and disabling a third port, complete transmission of the high-priority service can be ensured in a co-plane or hetero-plane dual-polarization manner, and only a third port is disabled without changing the service, thereby reducing same-frequency interference of the original service.

This embodiment of this application provides a method for degrading a transmission link from an E-band 4T4R mode to an FDD mode. In a rain/snow scenario, an E-band 4T4R failure problem can be resolved, and a transmission capacity is reduced by 50% compared with that of the E-band 4T4R. A method for recovering FDD mode to E-band 4T4R mode is also provided to ensure normal service transmission in normal weather conditions.

Another embodiment of this application is an embodiment of an apparatus supporting transmission mode switching, that is, an embodiment of a microwave apparatus supporting degradation from a 4T4R mode to an FDD mode, including a modulation module, a sending module, and a receiving module.

In 4T4R mode, 2T2R is used as a primary link, and 2T2R is used as a secondary link. Duplicate high-priority services on a secondary link to the two primary links.

For example, as shown in FIG. 9, the transmission service A may also be used to transmit a high-priority sub-service in both the service A and the service B, where D is downlink information, U is uplink information, and the frequencies of the link 1 and the link 4 are the same as f1. The frequencies of the link 2 and the link 3 is the same as f2. Link 1 and link 2 are selected as primary links, and link 3 and link 4 are selected as secondary links.

The sending module is configured to send a service. An embodiment of the sending module is that a high station sends a SIP.

The receiving module is configured to receive a service. An embodiment of the receiving module is that a low station receives a SIP.

An embodiment of the modulation module is an FDD Modem.

Through self-interference estimation, if a preset degradation switching condition is satisfied, the sending of the two secondary links is disabled, forming co-plane or hetero-plane dual-polarization. If a preset recovery switching condition is satisfied, a secondary link is restored to the 4T4R service for transmission.

This embodiment of this application provides an apparatus for supporting degradation of a transmission link from an E-band 4T4R mode to an FDD mode. In a rain/snow scenario, an E-band 4T4R failure problem can be resolved. Compared with E-band 4T4R, the transmission capacity decreases by 50%. In addition, the FDD mode can be recovered to E-band 4T4R, ensuring normal service transmission in normal weather conditions.

This application resolves a problem that a link is unavailable due to self-interference improvement of E-band 4T4R in a rain/snow scenario, and implements degradation and recovery from E-band 4T4R to the mode such as ASD+MRC, FDD-TDD, or FDD, thereby expanding a use scenario range of E-band 4T4R.

Another embodiment of this application provides a communication apparatus, which may be a chip or a chip system. When the communication apparatus is a chip or a chip system, the communication interface may be an input/output interface, or may be an input/output interface, an interface circuit, an output circuit, an input circuit, a pin, a related circuit, or the like on the chip or the chip system. The processor may alternatively be embodied as a processing circuit or a logic circuit.

Another embodiment of this application provides a computer-readable storage medium, where the computer-readable storage medium stores a computer program, and when the computer program is executed by a communication apparatus, the communication apparatus is enabled to implement any one of the foregoing possible communication methods.

Another embodiment of this application provides a computer program product including instructions, and when the instructions are executed by a computer, the communication apparatus is enabled to implement any one of the foregoing possible communication methods.

Another embodiment of this application provides a communication system, including the foregoing network devices and/or terminal devices.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in the figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disk.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method (1400), applied to a first apparatus, wherein the first apparatus comprises at least two port groups, and the method (1400) comprises:

   transmitting (1410) a first service through a first port group, the first port group comprises a first port and a second port, the first port is configured to send the first service, the second port is configured to receive the first service, the first port corresponds to a first frequency, and the second port corresponds to a second frequency;
   transmitting a second service through a second port group, wherein the second port group comprises a third port and a fourth port, the third port is configured to send the second service, the fourth port is configured to receive the second service, the third port corresponds to the second frequency, and the fourth port corresponds to the first frequency; and
   determining (1420) that a same-frequency isolation degree is less than or equal to a first threshold, or that a self-interference-to-noise power ratio, inr, satisfies a first condition, and transmitting (1430) a third service through the first port group and the second port group, wherein

the same-frequency isolation degree is a first isolation degree between the first port and the fourth port, and/or a second isolation degree between the second port and the third port, and the third service comprises the first service, a first sub-service of the first service and a second sub-service of the second service, or the first service and the second sub-service of the second service.

2. The method (1400) according to claim 1, the method (1400) further comprises:

adjusting a frequency corresponding to the third port to the first frequency, wherein the third port is configured to send the third service; and
adjusting a frequency corresponding to the fourth port to the second frequency, wherein the fourth port is configured to receive the third service.

3. The method (1400) according to claim 2, wherein the method (1400) further comprises:

performing first processing on the first port and the third port, so that a sending delay of the first port is the same as a sending delay of the third port, and a sending phase of the first port is the same as a sending phase of the third port; and
performing maximum ratio combining, MRC, on information received by the second port and information received by the fourth port.

4. An information transmission method (1400), applied to a first apparatus, wherein the first apparatus comprises at least two port groups, and the method (1400) comprises:

transmitting (1410) first service through a first port group, the first port group comprises a first port and a second port, the first port is configured to send the first service, the second port is configured to receive the first service, the first port corresponds to a first frequency, and the second port corresponds to a second frequency;
transmitting a second service through a second port group, wherein the second port group comprises a third port and a fourth port, the third port is configured to send the second service, the fourth port is configured to receive the second service, the third port corresponds to the second frequency, and the fourth port corresponds to the first frequency; and
determining (1420) that a same-frequency isolation degree is less than or equal to a first threshold, or that a self-interference-to-noise power ratio, inr, satisfies a first condition, determining a quantity of first slots and a quantity of second slots, sending a fourth service on the first slot through the first port, receiving the fourth service on the second slot through the second port, sending a fifth service on the first slot through the third port, and receiving the fifth service on the second slot through the fourth port, wherein the first slot and the second slot do not overlap, wherein
the same-frequency isolation degree is a first isolation degree between the first port and the fourth port, and/or a second isolation degree between the second port and the third port, the fourth service comprises the first service or a third service, the fifth service comprises the second service or the third service, and the third service comprises the first service, a first sub-service of the first service and a second sub-service of the second service, or the first service and the second sub-service of the second service.

5. The method (1400) according to claim 4, wherein the determining a quantity of first slots and a quantity of second slots comprises:
determining the quantity of first slots and the quantity of second slots based on an uplink-downlink ratio of the fourth service or the fifth service.

6. An information transmission method (1400), applied to a first apparatus, wherein the first apparatus comprises at least two port groups, and the method (1400) comprises:

transmitting (1410) a first service through a first port group, the first port group comprises a first port and a second port, the first port is configured to send the first service, the second port is configured to receive the first service, the first port corresponds to a first frequency, and the second port corresponds to a second frequency;
transmitting a second service through a second port group, wherein the second port group comprises a third port and a fourth port, the third port is configured to send the second service, the fourth port is configured to receive the second service, the third port corresponds to the second frequency, and the fourth port corresponds to the first frequency; and
determining (1420) that a same-frequency isolation degree is less than or equal to a first threshold, or that a self-interference-to-noise power ratio, inr, satisfies a first condition, and transmitting (1430) a service including disabling the third port, or transmitting a third service through the first port group and disabling the third port, wherein

the same-frequency isolation degree is a first isolation degree between the first port and the fourth port, and/or a second isolation degree between the second port and the third port, and the third service comprises the first service, a first sub-service of the first service and a second sub-service of the second service, or the first service and the second sub-service of the second service.

7. The method (1400) according to any one of claims 1 to 6, wherein a priority of the first service is higher than that of the second service, the first sub-service is a sub-service with a highest priority of the first service, and the second sub-service is a sub-service with a highest priority of the second service.

8. The method (1400) according to any one of claims 1 to 7, wherein the first condition is that the inr is less than or equal to a second threshold, or a relationship between the inr and a signal-to-noise ratio, snr, satisfies a first preset condition.

9. The method (1400) according to claim 8, wherein the first preset condition comprises:

$$snr > 8inr^2 + 14inr + 6$$.

10. A communication apparatus (1000, 1100), comprising:

a memory, configured to store computer instructions; and
a processor, configured to execute the computer instructions stored in the memory, to enable the communication apparatus (1000, 1100) to perform the method (1400) according to any one of claims 1 to 9; and
wherein the communication apparatus (1000, 1100) includes a transceiver (1010, 1130).

11. A computer-readable storage medium, wherein the computer-readable storage medium stores a computer program, and when the computer program is executed by a communication apparatus (1000, 1100), the communication apparatus (1000, 1100) is enabled to perform the method (1400) according to any one of claims 1 to 9;
wherein the communication apparatus (1000, 1100) includes a transceiver (1010, 1130).

12. A computer program product comprising instructions, wherein when the instructions are executed by a computer, a communication apparatus (1000, 1100) is enabled to perform the method (1400) according to any one of claims 1 to 9;
wherein the communication apparatus (1000, 1100) includes a transceiver (1010, 1130).

**Patentansprüche**

1. Informationsübertragungsverfahren (1400), das auf eine erste Vorrichtung angewendet wird, wobei die erste Vorrichtung zumindest zwei Port-Gruppen umfasst, und wobei das Verfahren (1400) umfasst:

Übertragen (1410) eines ersten Diensts durch eine erste Port-Gruppe, wobei die erste Port-Gruppe einen ersten Port und einen zweiten Port umfasst, der erste Port zum Senden des ersten Diensts ausgelegt ist, der zweite Port zum Empfangen des ersten Diensts ausgelegt ist, der erste Port einer ersten Frequenz entspricht und der zweite Port einer zweiten Frequenz entspricht,
Übertragen eines zweiten Diensts durch eine zweite Port-Gruppe, wobei die zweite Port-Gruppe einen dritten Port und einen vierten Port umfasst, der dritte Port zum Senden des zweiten Diensts ausgelegt ist, der vierte Port zum Empfangen des zweiten Diensts ausgelegt ist, der dritte Port der zweiten Frequenz entspricht und der vierte Port der ersten Frequenz entspricht, und
Bestimmen (1420), dass ein Gleichfrequenzisolierungsgrad kleiner oder gleich einer ersten Schwelle ist oder dass ein Selbst-Interferenz-Rausch-Leistungsverhältnis, Selbst-INR, eine erste Bedingung erfüllt, und Übertragen (1430) eines dritten Diensts durch die erste Port-Gruppe und die zweite Port-Gruppe, wobei
der Gleichfrequenzisolierungsgrad ein erster Isolierungsgrad zwischen dem ersten Port und dem vierten Port und/oder ein zweiter Isolierungsgrad zwischen dem zweiten Port und dem dritten Port ist und der dritte Dienst den ersten Dienst, einen ersten Unterdienst des ersten Diensts und einen zweiten Unterdienst des zweiten Diensts oder den ersten Dienst und den zweiten Unterdienst des zweiten Diensts umfasst.

**2.** Verfahren (1400) nach Anspruch 1, wobei das Verfahren (1400) ferner umfasst:

Einstellen einer Frequenz entsprechend dem dritten Port auf die erste Frequenz, wobei der dritte Port zum Senden des dritten Diensts ausgelegt ist; und
Einstellen einer Frequenz entsprechend dem vierten Port auf die zweite Frequenz, wobei der vierte Port zum Empfangen des dritten Diensts ausgelegt ist.

**3.** Verfahren (1400) nach Anspruch 2, wobei das Verfahren (1400) ferner umfasst:

Durchführen eines ersten Verarbeitens am ersten Port und am dritten Port, sodass eine Sendeverzögerung des ersten Ports dieselbe ist wie eine Sendeverzögerung des dritten Ports und eine Sendephase des ersten Ports dieselbe ist wie eine Sendephase des dritten Ports; und
Durchführen eines "Maximum Ratio Combining", MRC, an Informationen, die durch den zweiten Port empfangen werden, und Informationen, die durch den vierten Port empfangen werden.

**4.** Informationsübertragungsverfahren (1400), das auf eine erste Vorrichtung angewendet wird, wobei die erste Vorrichtung zumindest zwei Port-Gruppen umfasst, und wobei das Verfahren (1400) umfasst:

Übertragen (1410) eines ersten Diensts durch eine erste Port-Gruppe, wobei die erste Port-Gruppe einen ersten Port und einen zweiten Port umfasst, der erste Port zum Senden des ersten Diensts ausgelegt ist, der zweite Port zum Empfangen des ersten Diensts ausgelegt ist, der erste Port einer ersten Frequenz entspricht und der zweite Port einer zweiten Frequenz entspricht;
Übertragen eines zweiten Diensts durch eine zweite Port-Gruppe, wobei die zweite Port-Gruppe einen dritten Port und einen vierten Port umfasst, der dritte Port zum Senden des zweiten Diensts ausgelegt ist, der vierte Port zum Empfangen des zweiten Diensts ausgelegt ist, der dritte Port der zweiten Frequenz entspricht und der vierte Port der ersten Frequenz entspricht; und
Bestimmen (1420), dass ein Gleichfrequenzisolierungsgrad kleiner oder gleich einer ersten Schwelle ist oder dass ein Selbst-Interferenz-Rausch-Leistungsverhältnis, Selbst-INR, eine erste Bedingung erfüllt, Bestimmen einer Menge von ersten Schlitzen und einer Menge von zweiten Schlitzen, Senden eines vierten Diensts auf dem ersten Schlitz durch den ersten Port, Empfangen des vierten Diensts auf dem zweiten Schlitz durch den zweiten Port, Senden eines fünften Diensts auf dem ersten Schlitz durch den dritten Port und Empfangen des fünften Diensts auf dem zweiten Schlitz durch den vierten Port, wobei der erste Schlitz und der zweite Schlitz nicht überlappen, wobei
der Gleichfrequenzisolierungsgrad ein erster Isolierungsgrad zwischen dem ersten Port und dem vierten Port und/oder ein zweiter Isolierungsgrad zwischen dem zweiten Port und dem dritten Port ist, der vierte Dienst den ersten Dienst oder einen dritten Dienst umfasst, der fünfte Dienst den zweiten Dienst oder den dritten Dienst umfasst und der dritte Dienst den ersten Dienst, einen ersten Unterdienst des ersten Diensts und einen zweiten Unterdienst des zweiten Diensts oder den ersten Dienst und den zweiten Unterdienst des zweiten Diensts umfasst.

**5.** Verfahren (1400) nach Anspruch 4, wobei das Bestimmen einer Menge von ersten Schlitzen und einer Menge von zweiten Schlitzen umfasst:
Bestimmen der Menge von ersten Schlitzen und der Menge von zweiten Schlitzen basierend auf einem Uplink-Downlink-Verhältnis des vierten Diensts oder des fünften Diensts.

**6.** Informationsübertragungsverfahren (1400), das auf eine erste Vorrichtung angewendet wird, wobei die erste Vorrichtung zumindest zwei Port-Gruppen umfasst, und wobei das Verfahren (1400) umfasst:

Übertragen (1410) eines ersten Diensts durch eine erste Port-Gruppe, wobei die erste Port-Gruppe einen ersten Port und einen zweiten Port umfasst, der erste Port zum Senden des ersten Diensts ausgelegt ist, der zweite Port zum Empfangen des ersten Diensts ausgelegt ist, der erste Port einer ersten Frequenz entspricht und der zweite Port einer zweiten Frequenz entspricht;
Übertragen eines zweiten Diensts durch eine zweite Port-Gruppe, wobei die zweite Port-Gruppe einen dritten Port und einen vierten Port umfasst, der dritte Port zum Senden des zweiten Diensts ausgelegt ist, der vierte Port zum Empfangen des zweiten Diensts ausgelegt ist, der dritte Port der zweiten Frequenz entspricht und der vierte Port der ersten Frequenz entspricht; und
Bestimmen (1420), dass ein Gleichfrequenzisolierungsgrad kleiner oder gleich einer ersten Schwelle ist oder dass ein Selbst-Interferenz-Rausch-Leistungsverhältnis, Selbst-INR, eine erste Bedingung erfüllt, und Übertragen (1430) eines Diensts, einschließlich eines Deaktivierens des dritten Ports, oder Übertragen eines dritten Diensts durch die erste Port-Gruppe und Deaktivieren des dritten Ports, wobei
der Gleichfrequenzisolierungsgrad ein erster Isolierungsgrad zwischen dem ersten Port und dem vierten Port und/oder ein zweiter Isolierungsgrad zwischen dem zweiten Port und dem dritten Port ist und der dritte Dienst den ersten Dienst, einen ersten Unterdienst des ersten Diensts und einen zweiten Unterdienst des zweiten Diensts oder den ersten Dienst und den zweiten Unterdienst des zweiten Diensts umfasst.

7. Verfahren (1400) nach einem der Ansprüche 1 bis 6, wobei eine Priorität des ersten Diensts größer als die des zweiten Diensts ist, der erste Unterdienst ein Unterdienst mit einer höchsten Priorität des ersten Diensts ist und der zweite Unterdienst ein Unterdienst mit einer höchsten Priorität des zweiten Diensts ist.

8. Verfahren (1400) nach einem der Ansprüche 1 bis 7, wobei die erste Bedingung darin besteht, dass das INR kleiner oder gleich einer zweiten Schwelle ist oder eine Beziehung zwischen dem INR und einem Signal-Rausch-Verhältnis, SNR, eine erste vorgegebene Bedingung erfüllt.

9. Verfahren (1400) nach Anspruch 8, wobei die erste vorgegebene Bedingung umfasst:

$$snr > 8inr^2 + 14inr + 6.$$

10. Kommunikationsvorrichtung (1000, 1100), die umfasst:

einen Speicher, der zum Speichern von Computeranweisungen ausgelegt ist; und
einen Prozessor, der zum Ausführen der im Speicher gespeicherten Computeranweisungen ausgelegt ist, um es der Kommunikationsvorrichtung (1000, 1100) zu ermöglichen, das Verfahren (1400) nach einem der Ansprüche 1 bis 9 durchzuführen, und
wobei die Kommunikationsvorrichtung (1000, 1100) einen Transceiver (1010, 1130) einschließt.

11. Computerlesbares Speicherungsmedium, wobei das computerlesbare Speicherungsmedium ein Computerprogramm speichert, und wenn das Computerprogramm durch eine Kommunikationsvorrichtung (1000, 1100) ausgeführt wird, es der Kommunikationsvorrichtung (1000, 1100) ermöglicht wird, das Verfahren (1400) nach einem der Ansprüche 1 bis 9 durchzuführen;
wobei die Kommunikationsvorrichtung (1000, 1100) einen Transceiver (1010, 1130) einschließt.

12. Computerprogrammprodukt, das Anweisungen umfasst, wobei, wenn die Anweisungen durch einen Computer ausgeführt werden, es einer Kommunikationsvorrichtung (1000, 1100) ermöglicht wird, das Verfahren (1400) nach einem der Ansprüche 1 bis 9 durchzuführen;
wobei die Kommunikationsvorrichtung (1000, 1100) einen Transceiver (1010, 1130) einschließt.

**Revendications**

1. Procédé de transmission d'informations (1400), appliqué à un premier appareil, le premier appareil comprenant au moins deux groupes de ports, et le procédé (1400) comprenant :

la transmission (1410) d'un premier service par l'intermédiaire d'un premier groupe de ports, le premier groupe de ports comprenant un premier port et un deuxième port, le premier port étant configuré pour envoyer le premier service, le deuxième port étant configuré pour recevoir le premier service, le premier port correspondant à une première fréquence, et le second port correspond à une seconde fréquence ;
la transmission d'un deuxième service par l'intermédiaire d'un second groupe de ports, dans lequel le second groupe de ports comprend un troisième port et un quatrième port, le troisième port est configuré pour envoyer le deuxième service, le quatrième port est configuré pour recevoir le deuxième service, le troisième port correspond à la seconde fréquence, et le quatrième port correspond à la première fréquence ; et
la détermination (1420) qu'un degré d'isolation de fréquence identique est inférieur ou égal à un premier seuil, ou qu'un rapport de puissance auto-brouillage sur bruit, inr, satisfait à une première condition, et la transmission (1430) d'un troisième service par l'intermédiaire du premier groupe de ports et du second groupe de ports, dans lequel
le degré d'isolation de fréquence identique est un premier degré d'isolation entre le premier port et le quatrième port, et/ou un second degré d'isolation entre le deuxième port et le troisième port, et le troisième service comprend le premier service, un premier sous-service du premier service et un second sous-service du deuxième service, ou le premier service et le second sous-service du deuxième service.

2. Procédé (1400) selon la revendication 1, le procédé (1400) comprenant en outre :

le réglage d'une fréquence correspondant au troisième port à la première fréquence, dans lequel le troisième port est configuré pour envoyer le troisième service ; et
le réglage d'une fréquence correspondant au quatrième port à la seconde fréquence, dans lequel le quatrième port est configuré pour recevoir le troisième service.

3. Procédé (1400) selon la revendication 2, le procédé (1400) comprenant en outre :

l'exécution d'un premier traitement sur le premier port et le troisième port, de telle sorte qu'un retard d'envoi du premier port soit identique à un retard d'envoi du troisième port, et qu'une phase d'envoi du premier port soit identique à une phase d'envoi du troisième port ; et
l'exécution d'une combinaison de rapport maximal, MRC, sur des informations reçues par le deuxième port et des informations reçues par le quatrième port.

4. Procédé de transmission d'informations (1400), appliqué à un premier appareil, le premier appareil comprenant au moins deux groupes de ports, et le procédé (1400) comprenant :

la transmission (1410) d'un premier service par l'intermédiaire d'un premier groupe de ports, le premier groupe de ports comprenant un premier port et un deuxième port, le premier port est configuré pour envoyer le premier service, le deuxième port est configuré pour recevoir le premier service, le premier port correspond à une première fréquence, et le second port correspond à une seconde fréquence ;
la transmission d'un deuxième service par l'intermédiaire d'un second groupe de ports, dans lequel le second groupe de ports comprend un troisième port et un quatrième port, le troisième port est configuré pour envoyer le deuxième service, le quatrième port est configuré pour recevoir le deuxième service, le troisième port correspond à la seconde fréquence, et le quatrième port correspond à la première fréquence ; et
la détermination (1420) qu'un degré d'isolation de fréquence identique est inférieur ou égal à un premier seuil, ou qu'un rapport de puissance auto-brouillage sur bruit, inr, satisfait à une première condition, la détermination d'une quantité de premiers créneaux et d'une quantité de seconds créneaux, l'envoi d'un quatrième service sur le premier créneau par l'intermédiaire du premier port, la réception du quatrième service sur le second créneau par l'intermédiaire du deuxième port, l'envoi d'un cinquième service sur le premier créneau par l'intermédiaire du troisième port, et la réception du cinquième service sur le second créneau par l'intermédiaire du quatrième port, dans lequel le premier créneau et le second créneau ne se chevauchent pas, dans lequel le degré d'isolation de fréquence identique est un premier degré d'isolation entre le premier port et le quatrième port, et/ou un second degré d'isolation entre le deuxième port et le troisième port, le quatrième service comprend le premier service ou un troisième service, le cinquième service comprend le deuxième service ou le troisième service, et le troisième service comprend le premier service, un premier sous-service du premier service et un second sous-service du deuxième service, ou le premier service et le second sous-service du deuxième service.

5. Procédé (1400) selon la revendication 4, dans lequel la détermination d'une quantité de premiers créneaux et d'une quantité de seconds créneaux comprend :
la détermination de la quantité de premiers créneaux et de la quantité de seconds créneaux sur la base d'un rapport entre liaison montante et liaison descendante du quatrième service ou du cinquième service.

6. Procédé de transmission d'informations (1400), appliqué à un premier appareil, le premier appareil comprenant au moins deux groupes de ports, et le procédé (1400) comprenant :

la transmission (1410) d'un premier service par l'intermédiaire d'un premier groupe de ports, le premier groupe de ports comprenant un premier port et un deuxième port, le premier port étant configuré pour envoyer le premier service, le deuxième port étant configuré pour recevoir le premier service, le premier port correspondant à une première fréquence, et le second port correspondant à une seconde fréquence ;
la transmission d'un deuxième service par l'intermédiaire d'un second groupe de ports, dans lequel le second groupe de ports comprend un troisième port et un quatrième port, le troisième port est configuré pour envoyer le deuxième service, le quatrième port est configuré pour recevoir le deuxième service, le troisième port correspond à la seconde fréquence, et le quatrième port correspond à la première fréquence ; et

la détermination (1420) qu'un degré d'isolation de fréquence identique est inférieur ou égal à un premier seuil, ou qu'un rapport de puissance auto-brouillage sur bruit, inr, satisfait à une première condition, et la transmission (1430) d'un service comprenant la désactivation du troisième port, ou la transmission d'un troisième service par l'intermédiaire du premier groupe de ports et la désactivation du troisième port, dans lequel

le degré d'isolation de fréquence identique est un premier degré d'isolation entre le premier port et le quatrième port, et/ou un second degré d'isolation entre le deuxième port et le troisième port, et le troisième service comprend le premier service, un premier sous-service du premier service et un second sous-service du deuxième service, ou le premier service et le second sous-service du deuxième service.

7. Procédé (1400) selon l'une quelconque des revendications 1 à 6, dans lequel une priorité du premier service est supérieure à celle du deuxième service, le premier sous-service est un sous-service ayant la priorité la plus élevée du premier service, et le second sous-service est un sous-service ayant la priorité la plus élevée du deuxième service.

8. Procédé (1400) selon l'une quelconque des revendications 1 à 7, dans lequel la première condition consiste en ce que l'inr est inférieur ou égal à un second seuil, ou qu'une relation entre l'inr et un rapport signal sur bruit, snr, satisfait à une première condition prédéfinie.

9. Procédé (1400) selon la revendication 8, dans lequel la première condition prédéfinie comprend :

$$snr > 8inr^2 + 14inr + 6.$$

10. Appareil de communication (1000, 1100), comprenant :

une mémoire, configurée pour stocker des instructions informatiques ; et
un processeur, configuré pour exécuter les instructions informatiques stockées dans la mémoire, pour activer l'appareil de communication (1000, 1100) afin d'exécuter le procédé (1400) selon l'une quelconque des revendications 1 à 9 ; et
dans lequel l'appareil de communication (1000, 1100) comprend un émetteurrécepteur (1010, 1130).

11. Support de stockage lisible par ordinateur, dans lequel le support de stockage lisible par ordinateur stocke un programme informatique, et lorsque le programme informatique est exécuté par un appareil de communication (1000, 1100), l'appareil de communication (1000, 1100) est activé afin d'exécuter le procédé (1400) selon l'une quelconque des revendications 1 à 9 ;
dans lequel l'appareil de communication (1000, 1100) comprend un émetteurrécepteur (1010, 1130).

12. Produit programme informatique comprenant des instructions, dans lequel lorsque les instructions sont exécutées par un ordinateur, un appareil de communication (1000, 1100) est activé afin d'exécuter le procédé (1400) selon l'une quelconque des revendications 1 à 9 ;
dans lequel l'appareil de communication (1000, 1100) comprend un émetteurrécepteur (1010, 1130).

FIG. 1

FIG. 2

1400

| Sending apparatus | | Receiving apparatus |

1410: Transmit a service through a first transmission mode

1420: Determine that a same-frequency isolation degree is less than or equal to a first threshold, or that a self-interference power ratio satisfies a first condition

1430: Transmit a service through a second transmission mode

FIG. 3

Station A f1 | A | A | A | A | A | A | A | A | A | A |

f2 | B | B | B | B | B | B | B | B | B | B |

Station B f2 | E | E | E | E | E | E | E | E | E | E |

f1 | F | F | F | F | F | F | F | F | F | F |

FIG. 4

Station A f1

| | | | | | | | | | |
|---|---|---|---|---|---|---|---|---|---|
| A | A | A | A | A | A | A | A | A | A |

f2

| | | | | | | | | | |
|---|---|---|---|---|---|---|---|---|---|
| B | B | B | B | B | B | B | B | B | B |

Station B f1

| | | | | | | | | | |
|---|---|---|---|---|---|---|---|---|---|
| A | A | A | A | A | A | A | A | A | A |

f2

| | | | | | | | | | |
|---|---|---|---|---|---|---|---|---|---|
| B | B | B | B | B | B | B | B | B | B |

FIG. 5

FDD modulator

High and low station dual-channel sending SIP

High and low station dual-channel receiving SIP

Switch

Switch

Duplexer

Primary link

f1

f2

FDD modulator

High and low station dual-channel sending SIP

High and low station dual-channel receiving SIP

Switch

Switch

Duplexer

Secondary link

f2

f1

FIG. 6

FIG. 7

FIG. 8

Station A  f1

| D | D | D | D | D | D | D | D | D | D |

f2

| U | U | U | U | U | U | U | U | U | U |

Station B  f2

f1

FIG. 9

1000

Transceiver unit 1010

Processing unit 1020

FIG. 10

1100

Processor 1110

Transceiver 1130

Memory 1120

FIG. 11

1200

FIG. 12

1300

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111669205 A